# DEMANDE DE BREVET EUROPEEN

(11) **EP 0 722 877 A1**
(43) Date de publication de la demande: **24.07.1996**
(21) Numéro de dépôt: 96400031.9
(22) Date de dépôt: 05.01.1996
(51) Int. Cl.: B62D 1/18

(54) **Dispositif de fixation d'un ensemble de colonne de direction notamment de véhicule automobile**

(30) Priorité: 20.01.1995 FR 9500667
(71) Demandeur: ECIA - EQUIPEMENTS ET COMPOSANTS POUR L'INDUSTRIE AUTOMOBILE, F-25400 Audincourt (FR)
(72) Inventeur: Courvoisier, Patrick, F-25600 Vieux-Charmont (FR); Bertrand, Jean-Marie, F-25700 Valentigney (FR)
(74) Mandataire: Habasque, Etienne Joel Jean-François

(57) **Abrégé**

Ce dispositif, comportant une structure de fixation (2) de l'ensemble sur le reste du véhicule, munie de flasques (8,9) entre lesquels s'étend l'ensemble de colonne (3), cet ensemble étant associé à un tirant (10) s'étendant entre les flasques et comportant des moyens de butée (13) adaptés pour coopérer avec l'un des flasques (9), et des moyens de blocage (14) de l'ensemble en position, adaptés pour coopérer avec l'autre flasque (8), déplaçables entre une position de verrouillage, de blocage de l'ensemble entre les flasques et une position de déverrouillage, autorisant un déplacement de l'ensemble par rapport aux flasques, est caractérisé en ce que des moyens élastiques (13a) de maintien du tirant sous contrainte résiduelle lorsque les moyens de blocage (14) qui sont en position de déverrouillage, sont interposés entre les moyens de butée (13) et le flasque correspondant (9), ces moyens élastiques comportant des moyens en matériau de glissement d'appui sur le flasque correspondant.

## Description

La présente invention concerne un dispositif de fixation d'un ensemble de colonne de direction réglable notamment de véhicule automobile.

Certains véhicules automobiles sont munis depuis déjà plusieurs années, de dispositifs de fixation autorisant un réglage de la position du volant, destinés à permettre l'adaptation de la position de celui-ci à la morphologie du conducteur du véhicule.

C'est ainsi que la position de la colonne et donc du volant est réglable par exemple axialement et angulairement.

Dans l'état de la technique, ces dispositifs de fixation comportent une structure de fixation de l'ensemble reliée au reste de la structure du véhicule et comportant deux flasques entre lesquels est disposé l'ensemble de colonne, et des moyens de blocage de l'ensemble de colonne en position par rapprochement des flasques.

Ces moyens de blocage comprennent par exemple un tirant s'étendant entre les flasques, dans des évidements de ceux-ci, dont une première extrémité est munie de moyens de butée en appui sur l'un des flasques et dont une seconde extrémité est munie d'éléments de blocage de l'ensemble de colonne en position entre les flasques, ces moyens étant déplaçables entre une position de verrouillage, de blocage par serrage de l'ensemble et/ou du tirant entre les flasques et une position de déverrouillage, autorisant un déplacement de l'ensemble et du tirant par rapport aux flasques, pour permettre le réglage de la position de celui-ci.

Les flasques sont alors munis par exemple d'évidements en forme de lumières de guidage du tirant permettant le réglage mentionné ci-dessus.

Différents modes de réalisation de ces dispositifs et en particulier des moyens de blocage ont été décrits dans l'état de la technique.

On trouvera des exemples de réalisation de ceux-ci dans les documents GB-A-2 113 164 et FR-A-2 671 040.

Il a cependant été constaté à l'usage que ces dispositifs présentaient un certain nombre d'inconvénients, notamment au niveau de l'interface entre les moyens de butée du tirant et le flasque correspondant de la structure de fixation.

En effet, ces moyens de butée sont généralement constitués par un écrou vissé sur une extrémité filetée du tirant, cet écrou étant muni d'une surface de butée adaptée pour venir en appui sur le flasque correspondant.

Or, il a été constaté que les déplacements de cet écrou par rapport au flasque, lors des réglages en position de l'ensemble de colonne, provoquaient des détériorations des surfaces de contact de l'écrou et du flasque, se traduisant par exemple par l'apparition de griffures sur celles-ci, ces griffures engendrant à la longue, des bruits et des à-coups de déplacement de l'ensemble lors de ses réglages.

Le but de l'invention est donc de résoudre ces problèmes.

A cet effet, l'invention a pour objet un dispositif de fixation d'un ensemble de colonne de direction réglable notamment de véhicule automobile, du type comportant une structure de fixation de l'ensemble sur le reste du véhicule, munie de flasques entre lesquels s'étend l'ensemble de colonne, cet ensemble étant associé à un tirant s'étendant entre les flasques et comportant à une extrémité, des moyens de butée adaptés pour coopérer avec l'un des flasques et à une autre extrémité, des moyens de blocage de l'ensemble de colonne en position entre les flasques, adaptés pour coopérer avec l'autre flasque, déplaçables entre une position de verrouillage, de blocage par serrage de l'ensemble et/ou du tirant entre les flasques et une position de déverrouillage, autorisant un déplacement de l'ensemble de colonne par rapport aux flasques, pour permettre le réglage de la position de celui-ci, caractérisé en ce que des moyens élastiques de maintien du tirant sous contrainte résiduelle lorsque les moyens de blocage sont en position de déverrouillage, sont interposés entre les moyens de butée et le flasque correspondant, ces moyens élastiques étant reliés à ces moyens de butée et comportant des moyens en matériau de glissement d'appui sur le flasque correspondant, pour faciliter les déplacements de l'ensemble de colonne dans la structure de fixation.

L'invention sera mieux comprise à la lecture de la description qui va suivre, donnée uniquement à titre d'exemple et faite en se référant aux dessins annexés, sur lesquels :
- la Fig.1 représente une vue de côté schématique illustrant un dispositif de fixation d'un ensemble de colonne de direction réglable en position pour véhicule automobile;
- la Fig.2 représente une vue en coupe d'un exemple de réalisation de moyens de blocage en position d'un ensemble de colonne de direction réglable notamment de véhicule automobile, dans un dispositif de fixation;
- les Fig.3 et 4 représentent des vues partielles en coupe illustrant un premier exemple de réalisation de moyens élastiques entrant dans la constitution d'un dispositif de blocage selon l'invention;
- les Fig.5 et 6 représentent des vues partielles en coupe illustrant un second exemple de réalisation de moyens élastiques entrant dans la constitution d'un dispositif de blocage selon l'invention; et
- les Fig.7 et 8 représentent des vues partielles en coupe illustrant un troisième exemple de réalisation de moyens élastiques entrant dans la constitution d'un dispositif de blocage selon l'invention.

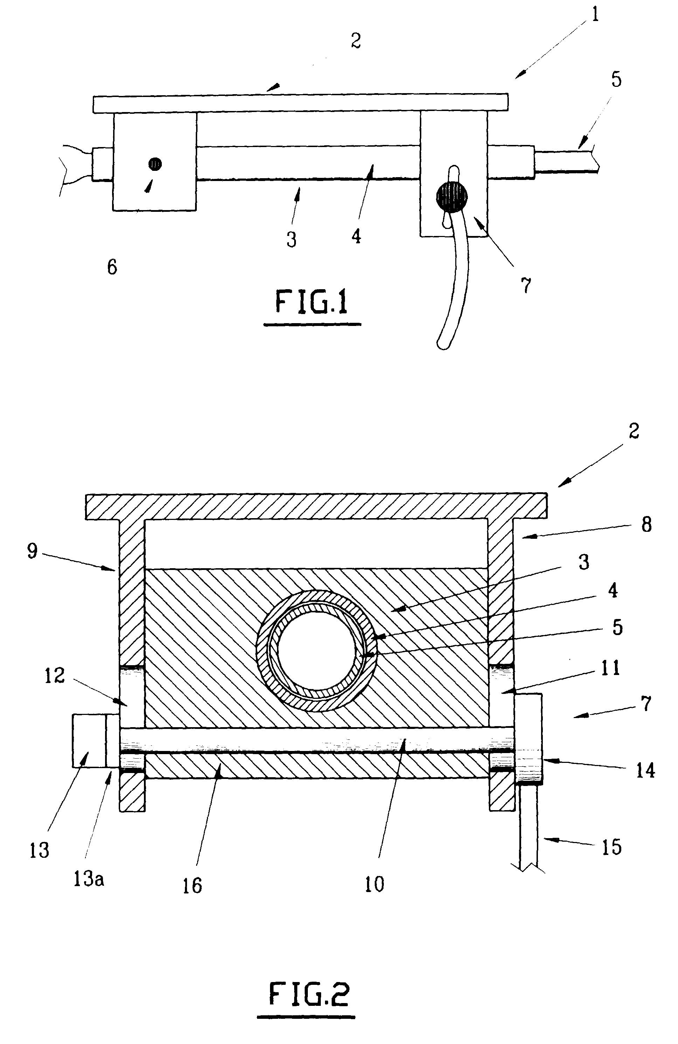

On reconnaît sur la figure 1, un dispositif de fixation d'un ensemble de colonne de direction réglable notamment de véhicule automobile, sur le reste de la structure d'un véhicule.

Ce dispositif est désigné par la référence générale 1 et comporte une structure de fixation, désignée par la référence générale 2, dans laquelle est monté déplaçable un ensemble de colonne de direction 3 comportant un corps de colonne 4 dans lequel est monté à rotation un arbre de direction 5.

L'une des extrémités de cet arbre de direction est adaptée pour recevoir le volant de direction du véhicule, tandis que l'autre extrémité de celui-ci est adaptée pour être reliée au reste du mécanisme de direction du véhicule.

L'une des extrémités de cet ensemble de colonne est articulée en 6 sur la structure de fixation, tandis que l'autre extrémité de celui-ci est associé à des moyens 7 de réglage en position.

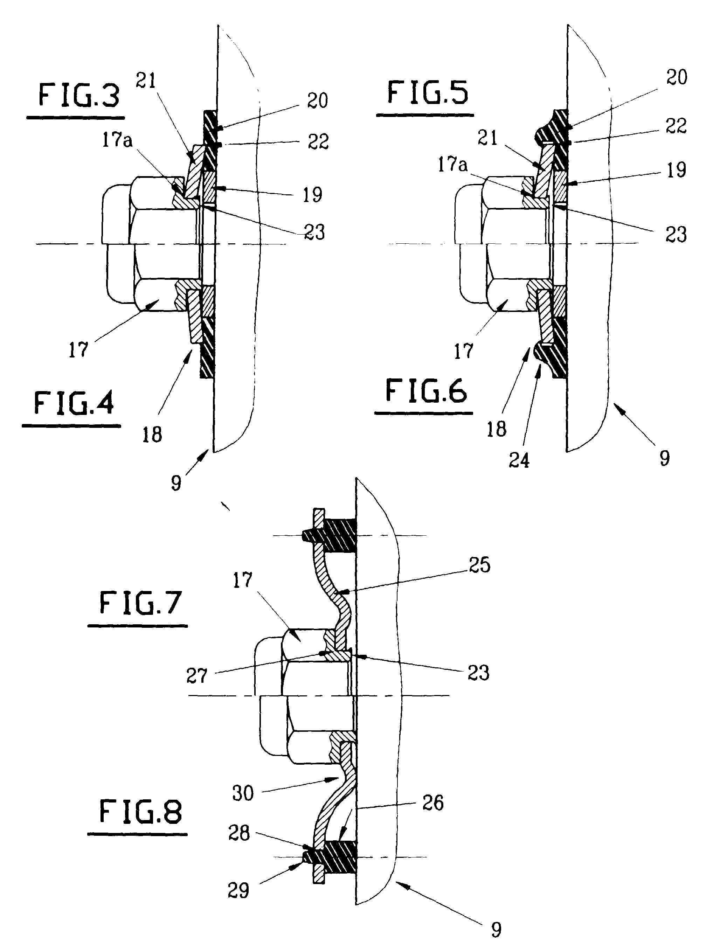

Ces moyens sont représentés plus en détail sur la figure 2 sur laquelle on reconnaît la structure de fixation 2.

Cette structure de fixation est munie par exemple de deux flasques 8 et 9 entre lesquels s'étend l'ensemble de colonne 3.

Cet ensemble est relié à un tirant 10 s'étendant entre les flasques de la structure, déplaçable dans des lumières 11 et 12 de ceux-ci et comportant à une extrémité des moyens de butée 13 adaptés pour coopérer avec l'un des flasques, par exemple 9, et à une autre extrémité, des moyens de blocage 14 de l'ensemble de colonne en position entre les flasques adaptés pour coopérer avec l'autre flasque 8.

Ces moyens sont déplaçables entre une position de verrouillage, de blocage par serrage de l'ensemble de colonne et/ou du tirant entre les flasques de la structure et une position de déverrouillage, autorisant un déplacement de l'ensemble de colonne et du tirant par rapport aux flasques de la structure pour permettre le réglage de la position de celui-ci.

Dans l'exemple de réalisation représenté, ces moyens autorisent un déplacement angulaire de l'ensemble de colonne entre les flasques de la structure de fixation pour permettre un réglage de la position en hauteur du volant de direction.

Différents modes de réalisation des moyens de blocage en position de l'ensemble de colonne ont été décrits dans l'état de la technique.

Ces moyens peuvent par exemple être des moyens de rapprochement des flasques comportant des moyens à genouillère, des moyens à rampe, des moyens à came, etc.. actionnables par un utilisateur par l'intermédiaire par exemple d'un levier de manoeuvre 15.

Le tirant est relié au corps 4 de l'ensemble de colonne, par exemple par l'intermédiaire d'un collier de montage 16 disposé autour de ce corps et s'étendant entre les flasques de la structure de fixation.

On conçoit alors que selon la position des moyens de blocage 14, l'ensemble de colonne est bloqué en position par serrage du collier entre les flasques ou est réglable en position, par déplacement de l'ensemble de colonne, du collier et du tirant entre les flasques de la structure de fixation.

Dans ce cas, le tirant 10 se déplace dans les lumières 11 et 12 des flasques.

Ainsi qu'on l'a mentionné précédemment, ces déplacements provoquent une dégradation des surfaces de contact correspondantes des moyens de butée 13 et du flasque 9 correspondant.

Ces moyens de butée comprennent par exemple un écrou vissé sur une extrémité filetée de ce tirant.

Pour résoudre ces problèmes et comme on peut le voir sur les figures 2 à 8, on interpose entre ces moyens de butée 13 et le flasque 9 correspondant de la structure de fixation, des moyens élastiques 13a de maintien du tirant sous contrainte résiduelle, lorsque les moyens de blocage sont en position de déverrouillage, ces moyens élastiques étant reliés à ces moyens de butée et comportant des moyens en matériau de glissement d'appui sur le flasque correspondant, pour faciliter les déplacements de l'ensemble de colonne dans la structure de fixation.

Dans le premier exemple de réalisation représenté sur les figures 3 et 4, qui illustrent respectivement une partie d'un dispositif de blocage selon l'invention en positions de déverrouillage et de verrouillage des moyens de blocage, les moyens de butée comportent un écrou 17, tandis que les moyens élastiques comportent une rondelle composite 18 munie d'une portion interne en matériau métallique désignée par la référence générale 19 et d'une portion externe en matériau de glissement désignée par la référence générale 20.

Une rondelle élastique 21 par exemple en matériau métallique, est interposée entre l'écrou 17 et la portion externe 20 en matériau de glissement de la rondelle composite 18.

Le bord périphérique interne de cette rondelle élastique 21 est engagé par exemple dans une gorge de réception de celui-ci ménagée dans l'écrou 17, cette gorge étant désignée par la référence générale 17a, tandis que le bord périphérique externe de cette rondelle élastique 21 est par exemple engagé dans une empreinte 22, prévue dans la portion externe 20 en matériau de glissement de la rondelle composite 18 ou obtenue lors du premier serrage cet écrou sur cette rondelle composite, pour assurer le centrage de ces pièces l'une par rapport à l'autre.

L'écrou 17 est également muni d'une surface de butée 23 en regard de la portion interne en matériau métallique 19 de la rondelle composite 18.

On conçoit alors qu'en position de verrouillage des moyens de blocage (Fig.4), l'écrou 17 et plus particulièrement la surface de butée 23 de celui-ci est en appui sur la portion interne en matériau métallique 19 de la rondelle composite 18, cette portion interne de cette rondelle étant elle-même en appui sur le flasque 9 correspondant de la structure de fixation, pour assurer un blocage efficace de l'ensemble de colonne en position dans la structure de fixation par coopération de l'écrou 17, de cette portion interne métallique 19 de la rondelle composite 18 et du flasque correspondant 9 de la structure de fixation.

Par contre, lorsque les moyens de blocage sont en position de déverrouillage (Fig.3), la rondelle élastique 21 tend à écarter l'écrou 17 du flasque 9 correspondant en prenant appui sur la portion externe 20 de la rondelle composite 18 et permet donc de maintenir le tirant des moyens de blocage sous contrainte résiduelle, tout en facilitant les déplacements de l'ensemble de colonne par rapport au reste de la structure de fixation, grâce à cette portion externe 20 en matériau de glissement de la rondelle composite 18 qui est alors en appui sur le flasque 9.

On conçoit alors que ceci permet de supprimer les dégradations des surfaces de contact rencontrées dans l'état de la technique tout en maintenant une contrainte résiduelle des moyens de blocage permettant à l'utilisateur d'avoir une bonne sensation de déplacement lors du réglage de l'ensemble en position.

Dans l'exemple de réalisation représenté sur les figures 5 et 6, dans lesquelles des numéros de référence identiques à ceux utilisés dans les figures 3 et 4 désignent des pièces ou éléments identiques, la portion externe 20 en matériau de glissement de la rondelle composite 18 comporte des moyens de centrage et de positionnement du bord périphérique externe de la rondelle élastique 21, qui se présentent sous la forme d'une collerette en forme de crochet permettant d'obtenir un bon positionnement de cette rondelle composite 18 par rapport à la rondelle élastique 21 et par rapport à l'écrou 17, par exemple lors de leur montage sur le tirant.

Cette collerette est désignée par la référence générale 24 sur ces figures.

Le fonctionnement de cet exemple de réalisation est identique à celui décrit en regard des figures 3 et 4.

Sur les figures 7 et 8, on a décrit un autre exemple de réalisation d'un tel dispositif, dans lesquelles les moyens de butée sont toujours formés par un écrou 17. Cet écrou 17 est toujours associé à une rondelle élastique 25 dont le bord périphérique interne est engagé sur cet écrou et dont le bord périphérique externe est associé à une rondelle d'appui en matériau de glissement 26 sur le flasque 9.

Le bord périphérique interne de cette rondelle 25 est toujours engagé par exemple dans une gorge 27 de l'écrou pour assurer sa fixation sur celui-ci.

Le bord périphérique externe de la rondelle élastique 25 comporte quant à lui des trous par exemple 28 de passage de tétons 29 de fixation de la rondelle d'appui 26.

Dans cet exemple de réalisation, l'écrou comporte toujours une surface de butée 23 qui est adaptée dans ce cas pour venir en appui sur le flasque 9, à travers l'évidement central de la rondelle d'appui, en position de verrouillage des moyens de blocage comme cela est illustré sur la figure 8.

Ainsi que cela est illustré, la rondelle élastique 25 peut également comporter une portion coudée 30 en appui sur le flasque 9 lorsque les moyens de blocage sont en position de verrouillage.

Dans les différents exemples de réalisation qui viennent d'être décrits, la rondelle d'appui 26 ou la portion périphérique externe 20 de la rondelle composite 18, peuvent être réalisées par exemple en matière plastique.

Il va de soi bien entendu que d'autres modes de réalisation de ces moyens d'appui en matériau de glissement et de ces moyens élastiques peuvent être envisagés.

C'est ainsi par exemple que ces moyens d'appui et ces moyens élastiques peuvent être formés d'une seule pièce, par une rondelle conique unique, par exemple en matière plastique, fixée sur l'écrou au niveau de son bord périphérique interne et en appui sur le flasque correspondant au niveau de son bord périphérique externe.

## Revendications

1. Dispositif de fixation d'un ensemble de colonne de direction réglable notamment de véhicule automobile, du type comportant une structure de fixation (2) de l'ensemble sur le reste du véhicule, munie de flasques (8,9) entre lesquels s'étend l'ensemble de colonne (3), cet ensemble étant associé à un tirant (10) s'étendant entre les flasques et comportant à une extrémité des moyens de butée (13;17) adaptés pour coopérer avec l'un des flasques (9) et à une autre extrémité, des moyens de blocage (14) de l'ensemble de colonne en position entre les flasques, adaptés pour coopérer avec l'autre flasque (8), déplaçables entre une position de verrouillage, de blocage par serrage de l'ensemble et/ou du tirant entre les flasques et une position de déverrouillage, autorisant un déplacement de l'ensemble de colonne par rapport aux flasques, pour permettre le réglage de la position de celui-ci, caractérisé en ce que des moyens élastiques (13a) de maintien du tirant sous contrainte résiduelle lorsque les moyens de blocage (14) qui sont en position de déverrouillage, sont interposés entre les moyens de butée (13;17) et le flasque correspondant (9), ces moyens élastiques (13a) étant reliés à ces moyens de butée (13;17) et comportant des moyens (18;26) en matériau de glissement d'appui sur le flasque correspondant, pour faciliter les déplacements de l'ensemble de colonne dans la structure de fixation.

2. Dispositif selon la revendication 1, caractérisé en ce que les moyens élastiques (13a) comprennent une rondelle élastique (25) dont le bord périphérique interne est engagé sur les moyens de butée (17) et dont le bord périphérique externe est associé à une rondelle (26) en matériau de glissement d'appui sur le flasque.

3. Dispositif selon la revendication 2, caractérisé en ce que les moyens de butée (17) comprennent une surface de butée (23) adaptée pour venir en appui sur le flasque correspondant (9), à travers un évidement central de la rondelle d'appui (26), en position de verrouillage des moyens de blocage.

4. Dispositif selon la revendication 1, caractérisé en ce que les moyens élastiques (13a) comprennent une rondelle composite (18) munie d'une portion interne en matériau métallique (19) et d'une portion externe en matériau de glissement (20) et une rondelle élastique (21) dont le bord périphérique interne est engagé sur les moyens de butée (17) et dont le bord périphérique externe est associé à la portion externe (20) de la rondelle composite (18), les moyens de butée (17) comportant une surface de butée (23) adaptée pour venir en appui sur la portion interne métallique (19) de la rondelle composite (18), en position de verrouillage des moyens de blocage.

5. Dispositif selon l'une quelconque des revendications 2 à 4, caractérisé en ce que le matériau de glissement est un matériau plastique.

6. Dispositif selon l'une quelconque des revendications 2 à 5, caractérisé en ce que les moyens de butée (17) comprennent une gorge (17a; 27) de réception du bord périphérique interne de la rondelle élastique (21; 25).

7. Dispositif selon l'une quelconque des revendications 2 à 6, caractérisé en ce que la portion externe de la rondelle composite (18) ou la rondelle d'appui (26) comporte des moyens de centrage et de positionnement (22; 24; 28,29) sur le bord périphérique externe de la rondelle élastique (21; 25).

8. Dispositif selon la revendication 1, caractérisé en ce que les moyens élastiques et les moyens d'appui sont formés d'une seule pièce par une rondelle conique en matière plastique dont le bord périphérique interne est fixé sur les moyens de butée et dont le bord périphérique externe est en appui sur le flasque correspondant.
